# EUROPEAN PATENT APPLICATION

(11) **EP 4 759 561 A1**
(43) Date of publication of application: **17.06.2026**
(21) Application number: 25221567.8
(22) Date of filing: 08.12.2025
(51) Int. Cl.: B60C 1/00, C08L 7/00

(54) **RUBBER COMPOSITION, ARTICLE THEREOF AND METHOD OF MIXING RUBBER**

(30) Priority: 12.12.2024 US 202418978507
(71) Applicant: The Goodyear Tire & Rubber Company, Akron, OH 44316 (US)
(72) Inventor: LIN, Chenchy Jeffrey, Akron, 44316 (US); SANDSTROM, Paul Harry, Cuyahoga Falls, 44223 (US); GOLDEN, James Joseph, North Canton, 44720 (US)
(74) Representative: Kutsch, Bernd

(57) **Abstract**

A composition is disclosed comprising at least one elastomer; 10 phr to 150 phr of a silica selected from a conventional silica and a pretreated silica; 0.5 phr to 15 phr of a reinforcing agent, wherein the reinforcing agent is a bismaleimide compound or a derivative thereof; and 0.5 phr to 25 phr of a coupling agent, wherein the coupling agent comprises an organosilane compound or a derivative thereof. The composition may be used in a tire as a vulcanized composition. Also disclosed is a method for mixing rubber, the method comprising a nonproductive stage and a productive stage, wherein the nonproductive stage comprises: combining together at least one elastomer, 10 phr to 150 phr of a conventional silica, 0.5 phr to 25 phr of a coupling agent comprising an organosilane compound, and 0.5 phr to 15 phr of an alkoxysilane, thereby forming an initial mixture; and mixing the initial mixture at a temperature of 100 °C to 170 °C, thereby forming a nonproductive mixture; and wherein the productive stage comprises: combining together the nonproductive mixture with 0.5 phr to 15 phr of a reinforcing agent, wherein the reinforcing agent is a bismaleimide compound or a derivative thereof, and a curing agent, thereby forming an intermediate mixture; and mixing the intermediate mixture at a temperature of 70 °C to 120 °C, thereby forming a productive mixture.

## Description

### BACKGROUND

The demand for improved tire performance has resulted in the development and evaluation of new materials that have desirable properties. Improving tire properties such as rolling resistance while maintaining balances in tradeoffs can be challenging. For example, additives that improve adhesion properties of a rubber composition can also result in an increase in hysteresis of a tire produced from the rubber composition, resulting in a higher rolling resistance. There is a need for rubber formulations that strike a balance between processability, low tire rolling resistance, and good adhesion properties. These needs and other needs are satisfied by the present invention.

### SUMMARY OF THE INVENTION

The invention relates to a composition in accordance with claim 1, to a vulcanized composition in accordance with claim 10, to an article in accordance with claim 12 and to a method in accordance with claim 14.

Dependent claims refer to preferred embodiments of the invention.

In accordance with the purpose(s) of the invention, as embodied and broadly described herein, the invention, in one aspect, relates to compositions comprising: an elastomer; a silica selected from a conventional silica and a pretreated silica; a reinforcing agent, wherein the reinforcing agent is a bismaleimide compound or a derivative thereof; and a coupling agent, wherein the coupling agent comprises an organosilane compound or a derivative thereof.

Also disclosed herein are vulcanized rubber compositions and articles, such as tires or components of tires, comprising said vulcanized rubber compositions.

In another aspect, the invention relates to methods for mixing rubber, comprising a nonproductive stage and a productive stage. The nonproductive stage comprises: combining together an elastomer, a conventional silica, a coupling agent comprising an organosilane compound, and an alkoxysilane, thereby forming an initial mixture; and mixing the initial mixture at a temperature of 100 °C to 170 °C, thereby forming a nonproductive mixture. The productive stage comprises: combining together the nonproductive mixture with a reinforcing agent, wherein the reinforcing agent is a bismaleimide compound or a derivative thereof, and a curing agent, thereby forming an intermediate mixture; and mixing the intermediate mixture at a temperature of 70 °C to 120 °C, thereby forming a productive mixture.

### DETAILED DESCRIPTION OF PREFERRED EMBODIMENTS OF THE INVENTION

Any recited method can be carried out in the order of events recited or in any other order that is logically possible. That is, unless otherwise expressly stated, it is in no way intended that any method or aspect set forth herein be construed as requiring that its steps be performed in a specific order.

It is also to be understood that the terminology used herein is for the purpose of describing particular aspects only. Unless defined otherwise, all technical and scientific terms used herein have the same meaning as commonly understood by one of ordinary skill in the art to which the disclosed compositions and methods belong. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein. Embodiments of the present invention will employ, unless otherwise indicated, techniques of material chemistry, organic chemistry, rubber mixing, rubber compounding, and the like, which are within the skill of the art. Such techniques are explained fully in the literature.

### A. Definitions

As used herein, nomenclature for compounds, including organic compounds, can be given using common names, IUPAC, IUBMB, or CAS recommendations for nomenclature. When one or more stereochemical features are present, Cahn-Ingold-Prelog rules for stereochemistry can be employed to designate stereochemical priority, E/Z specification, and the like. One of skill in the art can readily ascertain the structure of a compound if given a name, either by systemic reduction of the compound structure using naming conventions, or by commercially available software, such as CHEMDRAW^{™} (Cambridgesoft Corporation, U.S.A.).

The term "alkyl" as used herein is a branched or unbranched saturated hydrocarbon group of 1 to 24 carbon atoms, such as methyl, ethyl, n-propyl, isopropyl, n-butyl, isobutyl, s-butyl, t-butyl, n-pentyl, isopentyl, s-pentyl, neopentyl, hexyl, heptyl, octyl, nonyl, decyl, dodecyl, tetradecyl, hexadecyl, eicosyl, tetracosyl, and the like. The alkyl group can be cyclic or acyclic. The alkyl group can be branched or unbranched. The alkyl group can also be substituted or unsubstituted. For example, the alkyl group can be substituted with one or more groups including, but not limited to, alkyl, cycloalkyl, alkoxy, amino, ether, halide, hydroxy, nitro, silyl, sulfo-oxo, or thiol, as described herein.

The terms "alkoxy" and "alkoxyl" as used herein refer to an alkyl or cycloalkyl group bonded through an ether linkage; that is, an "alkoxy" group can be defined as -OA¹ where A¹ is alkyl as defined above.

The terms "rubber" and "elastomer" may be used herein interchangeably, unless indicated otherwise.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber/elastomer.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In some aspects, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including, but not limited to, tires.

As used herein, the term "repeat unit" as referenced in the elastomers described herein are derived from monomers used to produce the partially saturated elastomers. For example, polybutadiene has the repeat unit as provided below.

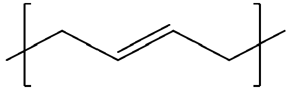

In certain aspects, when the elastomer is the polymerization product of two different monomers (e.g., A and B), the repeat unit can be represented by -A-B-.

As used herein, a "residue" of a chemical species refers to the moiety that is the resulting product of the chemical species in a particular reaction scheme or subsequent formulation or chemical product, regardless of whether the moiety is actually obtained from the chemical species. Thus, an isoprene residue in an elastomer refers to one or more - CH₂CH=C(CH₃)CH₂- units in the elastomer, regardless of whether isoprene was used to prepare the elastomer. Similarly, a butadiene residue in an elastomer refers to one or more - CH₂CH=CHCH₂- moieties in the elastomer, regardless of whether the residue is obtained by reacting sebacic acid or an ester thereof to obtain the polyester.

Unless otherwise specified, temperatures referred to herein are based on atmospheric pressure (i.e. one atmosphere).

### B. Rubber Compositions

In one aspect, the invention relates to compositions, such as uncured or cured/vulcanized rubber compositions, comprising an elastomer, a silica, a reinforcing agent, and a coupling agent. The compositions disclosed herein exhibit relatively low hysteresis while maintaining adhesion and processability. The present invention also relates to methods of making the disclosed compositions and to articles, such as tires and/or components of tires, comprising the compositions.

More specifically, in one aspect, the present invention relates to a composition comprising: an elastomer; 10 phr to 150 phr of a silica, selected from a conventional silica and a pretreated silica; 0.5 phr to 15 phr of a reinforcing agent, wherein the reinforcing agent can be a bismaleimide compound or a derivative thereof; and 0.5 phr to 25 phr of a coupling agent, wherein the coupling agent comprises an organosilane compound or a derivative thereof.

In another aspect, the composition can comprise from 10 phr to 150 phr, 10 phr to 100 phr, 20 phr to 100 phr, or 10 phr to 50 phr of the silica.

In another aspect, the composition can comprise from 0.5 phr to 15 phr, 0.5 phr to 10 phr, 0.5 phr to 5 phr, 1 phr to 10 phr, or 1 phr to 4 phr of the reinforcing agent.

In another aspect, the composition can comprise from 0.5 phr to 25 phr, 0.5 phr to 20 phr, 0.5 phr to 15 phr, 0.5 phr to 10 phr, 0.5 phr to 5 phr, 1 phr to 15 phr, or 2 phr to 15 phr of the coupling agent.

In a further aspect, when the silica is a conventional silica, the composition can further comprise from 0.5 phr to 15 phr, 0.5 phr to 10 phr, or 0.5 phr to 10 phr of an alkoxysilane or derivative thereof. In another further aspect, the coupling agent can further include carbon black.

The elastomer can comprise repeat units formed by residues of monomers selected from one or more of ethylene, propylene, isobutene, butadiene, isoprene, styrene, acrylonitrile, and a combination thereof. In another aspect, the elastomer can be selected from isoprene-isobutylene-rubber (Butyl rubber, IIR), halogenated isoprene-isobutylene-rubber (HIIR), ethylene-propylene-diene-terpolymer (EPDM), styrene-butadiene copolymer (SBR), acrylonitrile-butadiene copolymer (AB), acrylonitrile-butadiene-styrene copolymer (ABS), polybutadiene, natural rubber, cis-polyisoprene, and a combination thereof. In a further aspect, the elastomers generally having a number average molecular weight (Mₙ) between 100,000 Da and 500,000 Da. Molecular weight Mₙ may be determined by methods known in the art, such as by gel permeation chromatography following ASTM D3536 or equivalent.

In one aspect, the silica can be a pretreated silica, such as a pre-silanized silica, and can comprise an alkylsilane, an alkoxysilane, an organoalkoxysilyl polysulfide, or an organomercaptoalkoxysilane bonded to the silica. In another aspect, the pretreated silica can include a silica with a sulfur-containing silane bonded to the silica. In one aspect, the sulfur-containing silane can include an alkoxyorganomercaptosilane or a bis(3-triethoxysilylpropyl)polysulfide, with an average of 2 to 5 connecting sulfur atoms in its polysulfidic bridge. Examples of pre-silanized silicas suitable for use in the compositions described herein include Ciptane^{®} 255 LD and Ciptane^{®} LP (PPG Industries); silicas that have been pre-treated with a mercaptosilane; Coupsil^{®} 8113 (Degussa); Coupsil^{®} 6508; and Agilon^{®} 400, 454, and 458 silica from PPG Industries.

In one aspect, the pretreated silica can be treated with a silica dispersing aid. Such silica dispersing aids may include amines, amides, glycols, such as fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars. Exemplary fatty acids include stearic acid, palmitic acid and oleic acid. Exemplary fatty acid esters of hydrogenated and non-hydrogenated C5 and C6 sugars (e.g., sorbose, mannose, and arabinose) include, but are not limited to, the sorbitan oleates (such as sorbitan monooleate, dioleate, trioleate, and sesquioleate) as well as sorbitan esters of laurate, palmitate, and stearate fatty acids. Exemplary polyoxyethylene derivatives of fatty acid esters of hydrogenated and non-hydrogenated C5 and C6 sugars include polysorbates and polyoxyethylene sorbitan esters, which are analogous to the fatty acid esters of hydrogenated and non-hydrogenated sugars noted above except that ethylene oxide groups are placed on each of the hydroxyl groups. Example of amine and amide compounds can include diphenyl guanidine or any C1-C20 alkyl amine or C1-C20 alkyl amide.

The silica can also be a conventional silica, i.e., a non-pretreated silica. The conventional silica can include precipitated silica, such as those obtained by the acidification of a soluble silicate, e.g., sodium silicate. Conventional silicas can be characterized by a Brunauer-Emmett-Teller (BET) surface area, as measured using nitrogen gas. In one aspect, the BET surface area can be in the range of 40 m²/g to 600 m²/g or 80 m²/g to 300 m²/g. The BET method of measuring surface area is described in the Journal of the American Chemical Society, Volume 60, Page 304 (1930). In a further aspect, the conventional silica can be characterized by having a dibutylphthalate (DBP) absorption value in a range of 100 cm³/g to 400 cm³/g or 150 cm³/g to 300 cm³/g. In one aspect, the conventional silica can have an average ultimate particle size in the range of 0.01 µm to 0.05 µm as determined by an electron microscope. In other aspects, the silica particles are smaller than 0.01 µm. In other aspects, the silica particles are larger than 0.05 µm. In one aspect, commercially available silicas are used, such as silicas commercially available from PPG Industries under the Hi-Sil trademark (with designations 210, and 243); silicas available from Rhodia (with designations of Z1165MP and Z165GR); and silicas available from Degussa AG (with designations of VN2 and VN3). In another aspect, silica obtained from rice husk ash (RHA) can be used. Rice husks are a renewable resource that can be used to create modified silica particles. Examples of commercial RHA silicas include NZEROSIL-brand silicas (e.g., granulated NZEROSIL RH-255EG, microgranular NZEROSIL RH-350MG, and high surface area granulated NZEROSIL RH-230G). These silicas can be readily obtained from Oriental Silicas Corp. of Taiwan.

The reinforcing agent can be a bismaleimide compound or a derivative thereof. In one aspect, the reinforcing agent has a formula represented by the following structure: 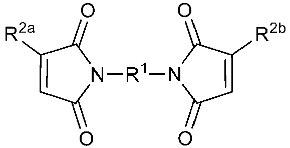 wherein R¹ can be an alkyl group, an alkenyl group, an alkynyl group, a cycloalkyl group, a cycloalkenyl group, a cycloalkynyl group, or an aromatic group; and R^{2a} and R^{2b} can be individually selected from a hydrogen and an alkyl group. In a further aspect, R¹ can be an aromatic group comprising no more than two aromatic rings. In a further aspect, R^{2a} and R^{2b} can both be hydrogen. In another aspect, the reinforcing agent can be selected from the group consisting of N,N'-ethylene-bismaleimide; N,N'-butylene-bismaleimide; N,N'-(m-phenylene)bismaleimide; N,N'-(p-phenylene)bismaleimide; N,N'-hexamethylene-bismaleimide; N,N'-4,4'-diphenylmethane-bismaleimide; N,N'-4,4'-diphenylether-bismaleimide; N,N'-4,4'-diphenylsulfone-bismaleimide; N,N'-4,4'-dicyclohexylethane-bismaleimide; N,N'-xylylene-bismaleimide; N,N'-diphenylcyclohexane-bismaleimide; N,N'-(p-tolylene)bismaleimide; N,N'-(methylenedi-p-phenylene)bismaleimide; N,N'-(oxydi-p-phenylene)bismaleimide; α,α-bis-(4-phenylene)bismaleimide; N,N'-(m-xylylene)biscitraconimide; α,α-bis-(4-maleimidophenyl)metadiisopropylbenzene; and a combination thereof.

The organosilane compound can comprise a bifunctional organosilane. In another aspect, the organosilane compound can be selected from the group consisting of bis[3-(trialkoxysilyl)alkyl]sulfide, bis[3-(trialkoxysilyl)alkyl]disulfide, bis[3-(trialkoxysilyl)alkyl]tetrasulfide, a mercapto silane, a blocked mercapto silane, a trialkoxymercaptoalkyl silane, a derivative thereof, and a combination thereof. In another aspect, the organosilane compound can be selected from a bis[3-(triethoxysilyl)alkyl]sulfide, bis[3-(triethoxysilyl)alkyl]disulfide, bis[3-(triethoxysilyl)alkyl]tetrasulfide, a mercapto silane, a blocked mercapto silane, a trialkoxymercaptoalkyl silane, a derivative thereof, and a combination thereof. In another aspect, the organosilane compound can be selected from the group consisting of bis[3-(trialkoxysilyl)propyl]sulfide, bis[3-(trialkoxysilyl)propyl]disulfide, bis[3-(trialkoxysilyl)propyl]tetrasulfide, a mercapto silane, a blocked mercapto silane, a trialkoxymercaptoalkyl silane, a derivative thereof, and a combination thereof. In a further aspect, the alkoxy group of the sulfide, disulfide, and/or tetrasulfide compound can be a C1-C6 alkoxy or a C1-C3 alkoxy. In another further aspect, the alkyl group of the sulfide, disulfide, and/or tetrasulfide compound can be a C1-C6 alkyl or a C1-C3 alkyl.

The mercapto silane can include compounds such as 3-mercaptopropyldimethylmethoxy silane, 3-mercaptopropyldimethylethoxy silane, 3-mercaptopropylmethyldimethoxy silane, 3-mercaptopropylmethyldiethoxy silane, 3-mercaptodimethylmethoxy silane, 3-mercaptodimethylethoxy silane, or a combination thereof. The blocked mercapto silane can include compounds such as 3-octanoylthiopropyltriethoxy silane 3-octanoylthiopropyltrimethoxy silane, or a combination thereof. The trialkoxymercaptoalkyl silane can include compounds such as (3-mercaptopropyl)trimethoxy silane, (3-mercaptopropyl)triethoxy silane, 3-mercaptomethyltrimethoxy silane, 3-mercaptomethyltriethoxy silane, or a combination thereof.

The alkoxy silane can be a C1-C5 alkoxysilane, a C1-C5 dialkoxysilane, a C1-C5 trialkoxysilane, or a combination thereof. In another aspect, the alkoxy silane can be a C1-C4 alkoxysilane, a C1-C4 dialkoxysilane, a C1-C4 trialkoxysilane, or a combination thereof. In another aspect, the alkoxy silane can be a C1-C3 alkoxysilane, a C1-C3 dialkoxysilane, a C1-C3 trialkoxysilane, or a combination thereof. In another aspect, the alkoxy silane can be a C1-C2 alkoxysilane, a C1-C2 dialkoxysilane, a C1-C2 trialkoxysilane, or a combination thereof. In another aspect, the alkoxy silane can be an ethoxysilane, a diethoxysilane, a triethoxysilane, a methoxysilane, a diethoxysilane, a trimethoxysilane, or a combination thereof. In another aspect, the alkoxysilane can be a C1-C18 alkyl alkoxysilane. In a further aspect, the C1-C18 alkyl alkoxy silane is selected from a C1-C18 alkyl trimethoxy silane, a C1-C18 alkyl triethoxy silane, and a combination thereof. In a further aspect, the C1-C18 alkyl alkoxysilane can be selected from methyltrimethoxysilane, ethyltrimethoxysilane, propyltrimethoxysilane, isobutyltrimethoxysilane, n-butyltrimethoxysilane pentyltrimethoxysilane, hexyltrimethoxysilane, heptyltrimethoxysilane, n-octyltrimethoxysilane, nonyltrimethoxysilane, decyltrimethoxysilane, undecyltrimethoxysilane, dodecyltrimethoxysilane, tridecyltrimethoxysilane, tetradecyltrimethoxysilane, pentadecyltrimethoxysilane, hexadecyltrimethoxysilane, heptadecyltrimethoxysilane, octadecyltrimethoxysilane, methyltriethoxysilane, ethyltriethoxysilane, propyltriethoxysilane, isobutyltriethoxysilane, n-butyltriethoxysilane pentyltriethoxysilane, hexyltriethoxysilane, heptyltriethoxysilane, n-octyltriethoxysilane, nonyltriethoxysilane, decyltriethoxysilane, undecyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane, octadecyltriethoxysilane, and a combination thereof.

The uncured compositions disclosed herein can further include 0.1 phr to 15.0 phr, 0.5 phr to 15.0 phr, 0.5 phr to 10.0 phr, or 0.5 phr to 5.0 phr of a vulcanizing or curing agent. The vulcanizing agent can include elemental sulfur, a sulfur-containing silane, or a combination thereof. Additionally, the uncured rubber composition can further include an accelerator. Accelerators can be preferably but not necessarily used to control the time and/or temperature required for vulcanization and to improve the properties of a vulcanized composition. The composition can include a vulcanizing accelerator in the amount of 0.1 phr to 10.0 phr, 0.5 phr to 10.0 phr, or 0.5 phr to 5.0 phr. Examples of accelerators include, but are not limited to, sulfenamides (e.g., N-cyclohexyl-2-benzothiazolesulfenamide, N-tertbutyl-2-benzothiazolesulfenamide); dithiocarbamates (e.g., zinc diethyl dithiocarbamate, zinc N-dibutyl dithiocarbamate); thiazoles (e.g., 2-mercaptobenzothiazole, 2,2'-dithiobenzothiazol); and guanidines (e.g., diphenylguanidine, 1,3-di-o-tolylguanidine).

The uncured rubber composition can comprise additional components, such as an oil, zinc oxide, fatty acids, anti-degradants, and/or curing aids (e.g., activators, accelerators, retarders). In one aspect, the oil is a processing oil. The processing oil can be included in the composition as an extending oil typically used to extend elastomers. The processing oil can also be included in the elastomer composition by addition of the oil directly during rubber compounding. The processing oil used can include both an extending oil present in the elastomers and a process oil added during compounding. Suitable processing oils include, but are not limited to, various oils as are known in the art, including aromatic, paraffinic, naphthenic, vegetable oils, and low PCA oils, such as MES, TDAE, SRAE, and heavy naphthenic oils. Suitable vegetable oils include, for example, soybean oil, sunflower oil, and canola oil which are in the form of esters containing a certain degree of unsaturation. Examples of fatty acids include, but are not limited to, stearic acid, palmitic acids, oleic acid, and mixtures thereof. Anti-degradants can include antioxidants and antiozonants. Representative antioxidants include, but are not limited to, phenylene diamine compounds (e.g., diphenyl-p-phenylenediamine), hydroquinoline compounds (e.g., anti-polymerized trimethyl dihydroquinoline), amine compounds, dithiocarbamate compounds, phenolic compounds, phosphite compounds, toluimidazole compounds, and others, such as those disclosed in The Vanderbilt Rubber Handbook (1978), Pages 344 through 346. Representative antiozonants include, but are not limited to, N-phenyl-N'-(1,3-dimethylbutyl)-p-phenylenediamine (6PPD) and N,N'-dixylene-p-phenylenediamine (DTPD). Accelerators can include, but are not limited to, sulfenamide compounds (e.g., N-cyclohexyl-2-benzothiazolesulfenamide and N-tertbutyl-2-benzothiazolesulfenamide), guanidine compounds (e.g., diphenylguanidine), dithiocarbamate compounds, thiadiazol compounds, thiazole compounds, thiourea compounds, thiuram compound, and xanthate compounds. Retarders can include phthalic anhydrides, phthalimides (e.g., N-(cyclohexylthio)phthalimide), sulfenamide compounds, and acids (e.g., benzoic acid and salicylic acid).

The compositions disclosed herein can be characterized as having good processability (e.g., in rubber plant production processes) and relatively low rolling resistance. Properties of the compositions disclosed herein can be determined before, during, or after cure. In one aspect, the compositions disclosed herein can have an uncured dynamic storage shear modulus (G') that is reduced by 20% to 40% or 30% to 40% when the silica is a conventional silica and the reinforcing agent is a bismaleimide compound or derivative thereof, where the uncured dynamic storage shear modulus is measured at a strain amplitude of 15%, a temperature of 100 °C, and a frequency of 0.83 Hz.

In another aspect, the compositions disclosed herein can have an uncured dynamic storage shear modulus (G') that is reduced by at least 30% or at least 35% when the silica is a conventional silica and the reinforcing agent is a bismaleimide compound or derivative thereof, where the uncured dynamic storage shear modulus is measured at a strain amplitude of 15%, a temperature of 100 °C, and a frequency of 0.83 Hz. Dynamic storage shear modulus of a rubber composition measured before or after cure can be performed using a rubber process analyzer, for example, in accordance with ASTMD5289-19a.

The cured/vulcanized compositions disclosed herein can have a normalized hysteresis loss, expressed as tan d, that is at least 10% smaller or, in another aspect, 10% to 20% smaller than the normalized hysteresis loss of an equivalent composition that comprises a pretreated silica in place of both the conventional silica and the alkoxysilane. Tan d is be measured at a strain amplitude of 10%, a temperature of 100 °C, and a frequency of 1 Hz. Tan d can be quantified as the ratio of the dynamic loss modulus (G") to the dynamic storage shear modulus (G"/G'). In another aspect, the vulcanized rubber compositions can have a fabric cord adhesion that is at least 10% greater or, in another aspect, 10% to 20% greater than the fabric cord adhesion of an equivalent composition that comprises a pretreated silica in place of both the conventional silica and the alkoxysilane, where the fabric cord adhesion is measured at a temperature of 100 °C against nylon fabric or polyester fabric. Further details regarding methods for testing the various properties of the compositions can be found in the Examples.

### C. Preparation and Applications of Rubber Compositions

The compositions disclosed herein can be compounded by methods generally known in the rubber compounding art, such as mixing the elastomer, silica, reinforcing agent, and coupling agent with various vulcanizable constituent rubbers and with various commonly used additive materials such as: curing/vulcanizing agents, such as sulfur donors (e.g., elemental sulfur); curing aids, such as activators, accelerators, and retarders; processing additives such as oils, resins (including tackifying resins), and plasticizers; fillers, such as carbon black and silica; pigments; fatty acids; zinc oxide; waxes; anti-degradants, such as antioxidants and antiozonants; and peptizing agents. Depending on the intended use of the vulcanizable and vulcanized material (rubbers), the additives mentioned above are selected and commonly used in conventional amounts. In one aspect, zinc oxide can be included in the rubber compositions in amounts of 1 phr to 5 phr. In another aspect, processing additives can be included in the rubber compositions in amounts of 1 phr to 50 phr. In a further aspect, resins, e.g., phenolic resins, can be included in amounts of 0.5 phr to 10 phr or 0.5 phr to 5 phr. In another further aspect, oils can be included in amounts of 0.5 phr to 10 phr or 0.5 phr to 5 phr. In another aspect, anti-degradants, including antioxidants and antiozonants, can be included in amounts of 0.5 phr to 15 phr or 0.5 phr to 10 phr. Representative antioxidants and antiozonants include those listed previously herein. In one aspect, fatty acids are included in amounts of 0.5 phr to 3 phr. Examples of fatty acids include those listed previously herein. In one aspect, waxes are included in amounts of 1 phr to 5 phr. Microcrystalline waxes, paraffinic waxes, and combinations thereof can be used. In another aspect, curing/vulcanizing agents can be included in amounts of 1 phr to 15 phr or 1 phr to 5 phr. In another aspect, curing aids, including activators, accelerators, and retarders, can be included in amounts of 0.5 phr to 15 phr or 0.5 phr to 5 phr. Representative curing aids include those listed previously herein.

The compositions disclosed herein can be mixed by methods known in the rubber mixing art. For example, the ingredients can be mixed in at least two stages, namely, at least one nonproductive stage followed by a productive mix stage. The final curatives, including curing or vulcanizing agents, may be typically mixed in the final stage, conventionally called the "productive" mix stage. In the productive mix stage, mixing typically occurs at a temperature, or ultimate temperature, lower than the mix temperature(s) of any preceding nonproductive mix stage(s). In one aspect, the mixing stages can comprise thermomechanical mixing, generally characterized by mechanical working in a mixer (e.g., internal batch mixer) or extruder for a period of time at an elevated temperature suitable to produce a rubber. The appropriate duration of the thermomechanical mixing varies as a function of the operating conditions and the volume and nature of the components. For example, the thermomechanical mixing may be from 0.5 to 10 minutes. In one aspect, the method for mixing rubber can comprise a nonproductive stage and a productive stage. The nonproductive stage can include combining together an elastomer, 10 phr to 150 phr, 20 phr to 125 phr, or 20 phr to 100 phr of a conventional silica, 0.5 phr to 25 phr, 1 phr to 20 phr, or 2 phr to 15 phr of a coupling agent comprising an organosilane compound, and 0.5 phr to 15 phr, 0.5 phr to 10 phr, or 1 phr to 5 phr. of an alkoxysilane, thereby forming an initial mixture; and mixing the initial mixture at a temperature of 100 °C to 170 °C, thereby forming a nonproductive mixture. The productive stage can include combining together the nonproductive mixture with 0.5 phr to 15 phr, 0.5 phr to 10 phr, or 1 phr to 5 phr of a reinforcing agent, wherein the reinforcing agent is a bismaleimide compound or a derivative thereof, and a curing agent, thereby forming an intermediate mixture; and mixing the intermediate mixture at a temperature of 70 °C to 120 °C, thereby forming a productive mixture.

This invention also provides for articles that incorporate any of the vulcanized rubber compositions disclosed herein. In one aspect, the article comprises a tire, such as a pneumatic tire, or a component of a tire. The tire can be a race tire, passenger tire, aircraft tire, agricultural tire, off-the-road tire, truck or bus tire, or the like. The tire can also be a radial or bias. The component of the tire can be a tread, base, sidewall, apex, chafer, sidewall insert, overlay, wirecoat, innerliner, or a combination thereof. In another aspect, the component of the tire including the composition can be a tread, base, sidewall, apex, overlay, wirecoat, ply coat, or a combination thereof. Vulcanization of the disclosed tires is generally carried out at conventional temperatures ranging from 100 °C to 200 °C or from 110 °C to 180 °C. Such tires can be built, shaped, molded and cured by various methods which are known and will be readily apparent to those having skill in such art.

### D. Aspects

The following listing of exemplary aspects supports and is supported by the invention provided herein.

Aspect 1. A composition, comprising an elastomer; 10 phr to 150 phr of a silica, selected from a conventional silica and a pretreated silica; 0.5 phr to 15 phr of a reinforcing agent, wherein the reinforcing agent is a bismaleimide compound or a derivative thereof; and 0.5 phr to 25 phr of a coupling agent, wherein the coupling agent comprises an organosilane compound or a derivative thereof.

Aspect 2. The composition of aspect 1, wherein when the silica is a conventional silica, the composition further comprises from 0.5 phr to 15 phr of an alkoxysilane or derivative thereof.

Aspect 3. The composition of aspect 1, wherein when the silica is a conventional silica, the composition further comprises from 1 phr to 10 phr of an alkoxysilane or derivative thereof.

Aspect 4. The composition of aspect 2 or aspect 3, wherein the alkoxysilane is a C1-C5 alkoxysilane, a C1-C5 dialkoxysilane, a C1-C5 trialkoxysilane, or a combination thereof.

Aspect 5. The composition of aspect 2 or aspect 3, wherein the alkoxysilane is a C1-C3 alkoxysilane, a C1-C3 dialkoxysilane, a C1-C3 trialkoxysilane, or a combination thereof.

Aspect 6. The composition of any one of aspects 2-5, wherein the alkoxysilane is a C1-C18 alkyl alkoxysilane.

Aspect 7. The composition of any one of aspects 2-6, wherein the alkoxysilane is selected from a C1-C18 alkyl trimethoxysilane, a C1-C18 alkyl triethoxysilane, and a combination thereof.

Aspect 8. The composition of any one of aspects 2-7, wherein the alkoxysilane is selected from the group consisting of methyltrimethoxysilane, ethyltrimethoxysilane, propyltrimethoxysilane, isobutyltrimethoxysilane, n-butyltrimethoxysilane pentyltrimethoxysilane, hexyltrimethoxysilane, heptyltrimethoxysilane, n-octyltrimethoxysilane, nonyltrimethoxysilane, decyltrimethoxysilane, undecyltrimethoxysilane, dodecyltrimethoxysilane, tridecyltrimethoxysilane, tetradecyltrimethoxysilane, pentadecyltrimethoxysilane, hexadecyltrimethoxysilane, heptadecyltrimethoxysilane, octadecyltrimethoxysilane, methyltriethoxysilane, ethyltriethoxysilane, propyltriethoxysilane, isobutyltriethoxysilane, n-butyltriethoxysilane pentyltriethoxysilane, hexyltriethoxysilane, heptyltriethoxysilane, n-octyltriethoxysilane, nonyltriethoxysilane, decyltriethoxysilane, undecyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane, octadecyltriethoxysilane, and a combination thereof.

Aspect 9. The composition of any one of aspects 1-3, wherein the composition comprises from 20 phr to 100 phr of the silica.

Aspect 10. The composition of any one of aspects 1-9, wherein the elastomer comprises repeat units formed from residues of monomers selected from one or more of ethylene, propylene, isobutene, butadiene, isoprene, styrene, acrylonitrile, and a combination thereof.

Aspect 11. The composition of any one of aspects 1-10, wherein the elastomer comprises isoprene-isobutylene-rubber, halogenated isoprene-isobutylene-rubber, ethylene-propylene-diene-terpolymer, styrene-butadiene rubber, acrylonitrile-butadiene rubber, acrylonitrile-butadiene-styrene copolymer, polybutadiene, natural rubber, cis polyisoprene, or a combination thereof.

Aspect 12. The composition of any one of aspects 1-11, wherein the elastomer comprises natural rubber and styrene butadiene rubber.

Aspect 13. The composition of any one of aspects 1-12, wherein the conventional silica is a precipitated silica.

Aspect 14. The composition of any one of aspects 1-13, wherein the reinforcing agent has a formula represented by the following structure: 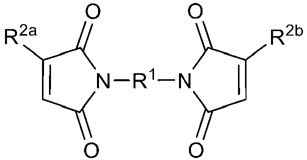 wherein, R¹ is an alkyl group, an alkenyl group, an alkynyl group, a cycloalkyl group, a cycloalkenyl group, a cycloalkynyl group, or an aromatic group; and R^{2a} and R^{2b} are individually selected from a hydrogen and an alkyl group.

Aspect 15. The composition of aspect 14, wherein R¹ is an aromatic group comprising no more than two aromatic rings.

Aspect 16. The composition of aspect 14 or aspect 15, wherein R^{2a} and R^{2b} are hydrogen.

Aspect 17. The composition of any one of aspects 1-16, wherein the reinforcing agent is selected from the group consisting of N,N'-ethylene-bismaleimide; N,N'-butylene-bismaleimide; N,N'-(m-phenylene)bismaleimide; N,N'-(p-phenylene)bismaleimide; N,N'-hexamethylene-bismaleimide; N,N'-4,4'-diphenylmethane-bismaleimide; N,N'-4,4'-diphenylether-bismaleimide; N,N'-4,4'-diphenylsulfone-bismaleimide; N,N'-4,4'-dicyclohexylethane-bismaleimide; N,N'-xylylene-bismaleimide; N,N'-diphenylcyclohexane-bismaleimide; N,N'-(p-tolylene)bismaleimide; N,N'-(methylenedi-p-phenylene)bismaleimide; N,N'-(oxydi-p-phenylene)bismaleimide; α,α-bis-(4-phenylene)bismaleimide; N,N'-(m-xylylene)biscitraconimide; α,α-bis-(4-maleimidophenyl)metadiisopropylbenzene; and a combination thereof.

Aspect 18. The composition of any one of aspects 1-17, wherein the reinforcing agent is N,N'-m-phenylene-bismaleimide.

Aspect 19. The composition of any one of aspects 1-18, wherein the composition comprises from 1 phr to 10 phr of the reinforcing agent.

Aspect 20. The composition of any one of aspects 1-19, wherein the coupling agent further comprises carbon black.

Aspect 21. The composition of any one of aspects 1-20, wherein the organosilane compound comprises a bifunctional organosilane.

Aspect 22. The composition of any one of aspects 1-20, wherein the organosilane compound is selected from the group consisting of bis[3-(trialkoxysilyl)alkyl]sulfide, bis[3-(trialkoxysilyl)alkyl]disulfide, bis[3-(trialkoxysilyl)alkyl]tetrasulfide, a mercapto silane, a blocked mercapto silane, a trialkoxymercaptoalkyl silane, a derivative thereof, and a combination thereof.

Aspect 23. The composition of aspect 21, wherein the mercapto silane is selected from 3-mercaptopropylmethyldimethoxy silane, 3-mercaptopropylmethyldiethoxy silane, 3-mercaptopropylmethyldiethoxy silane, 3-mercaptodimethylmethoxy silane, 3-mercaptodimethylethoxy silane, and a combination thereof.

Aspect 24. The composition of aspect 22 or aspect 23, wherein the blocked mercapto silane is selected from 3-octanoylthiopropyltriethoxy silane, 3-octanoylthiopropyltrimethoxy silane, and a combination thereof.

Aspect 25. The composition of any one of aspects 22-24, wherein the trialkoxymercaptoalkyl silane is selected from (3-mercaptopropyl)trimethoxy silane, (3-mercaptopropyl)triethoxy silane, (3-mercaptomethyl)trimethoxy silane, (3-mercaptomethyl)triethoxy silane, and a combination thereof.

Aspect 26. The composition of any one of aspects 1-25, wherein the composition comprises from 2 phr to 15 phr of the coupling agent.

Aspect 27. The composition of any one of aspects 1-26, wherein the composition has an uncured dynamic storage shear modulus that is reduced by 20% to 40% when the silica is a conventional silica and the reinforcing agent is a bismaleimide compound; and wherein the uncured dynamic storage shear modulus is measured at a strain amplitude of 15%, a temperature of 100 °C, and a frequency of 0.83 Hz.

Aspect 28. The composition of any one of aspects 1-27, wherein the composition has an uncured dynamic storage shear modulus that is reduced by 30% to 40% when the silica is a conventional silica and the reinforcing agent is a bismaleimide compound; and wherein the uncured dynamic storage shear modulus is measured at a strain amplitude of 15%, a temperature of 100 °C, and a frequency of 0.83 Hz.

Aspect 29. A vulcanized rubber composition, comprising the composition of any one of aspects 1-27 that has been vulcanized.

Aspect 30. An article comprising the vulcanized rubber composition of aspect 29.

Aspect 31. The article of aspect 30, wherein the article comprises a tire or a component of a tire.

Aspect 32. The article of aspect 31, wherein the component of the tire comprises a tread, base, sidewall, apex, overlay, wirecoat, ply coat, or a combination thereof.

Aspect 33. A composition, comprising an elastomer; 10 phr to 150 phr of a conventional silica; 0.5 phr to 15 phr of a bismaleimide compound; 0.5 phr to 25 phr of an organosilane compound; and 0.5 phr to 15 phr of an alkoxysilane.

Aspect 34. The composition of aspect 33, wherein the composition has an uncured dynamic storage shear modulus that is at least 35% smaller than the uncured dynamic storage shear modulus of an equivalent composition that comprises a pretreated silica in place of the conventional silica; and wherein the uncured dynamic storage shear modulus is measured at a strain amplitude of 15%, a temperature of 100 °C, and a frequency of 0.83 Hz.

Aspect 35. The composition of aspect 33, wherein the composition has an uncured dynamic storage shear modulus that is 20% to 40% smaller than the uncured dynamic storage shear modulus of an equivalent composition that comprises a pretreated silica in place of the conventional silica; and wherein the uncured dynamic storage shear modulus is measured at a strain amplitude of 15%, a temperature of 100 °C, and a frequency of 0.83 Hz.

Aspect 36. A vulcanized rubber composition, comprising the composition of aspect 33 that has been vulcanized.

Aspect 37. The vulcanized rubber composition of aspect 35, wherein the vulcanized rubber composition has a normalized hysteresis loss, expressed as tan d that is at least 10% smaller than the normalized hysteresis loss of an equivalent composition that comprises a pretreated silica in place of both the conventional silica and the alkoxysilane; and wherein tan d is measured at a strain amplitude of 10%, a temperature of 100 °C, and a frequency of 1 Hz.

Aspect 38. The vulcanized rubber composition of aspect 36 or aspect 37, wherein the vulcanized rubber composition has a normalized hysteresis loss, expressed as tan d that is 10% to 20% smaller than the normalized hysteresis loss of an equivalent composition that comprises a pretreated silica in place of both the conventional silica and the alkoxysilane; and wherein tan d is measured at a strain amplitude of 10%, a temperature of 100 °C, and a frequency of 1 Hz.

Aspect 39. The vulcanized rubber composition of any one of aspects 36-38, wherein the vulcanized rubber composition has a fabric cord adhesion that is at least 10% greater than the fabric cord adhesion of an equivalent composition that comprises a pretreated silica in place of the conventional silica; and wherein the fabric cord adhesion is measured at a temperature of 100 °C against nylon fabric or polyester fabric.

Aspect 40. The vulcanized rubber composition of any one of aspects 36-38, wherein the vulcanized rubber composition has a fabric cord adhesion that is 10% to 20% greater than the fabric cord adhesion of an equivalent composition that comprises a pretreated silica in place of both the conventional silica and the alkoxysilane; and wherein the fabric cord adhesion is measured at a temperature of 100 °C against nylon fabric or polyester fabric.

Aspect 41. An article comprising the vulcanized rubber composition of any one of aspects 35-39.

Aspect 42. The article of aspect 41, wherein the article comprises a tire or a component of a tire.

Aspect 43. The article of aspect 42, wherein the component of the tire comprises a tread, base, sidewall, apex, overlay, wirecoat, ply coat, or a combination thereof.

Aspect 44. A method for mixing rubber, comprising a nonproductive stage and a productive stage, wherein the nonproductive stage comprises combining together an elastomer, 10 phr to 150 phr of a conventional silica, 0.5 phr to 25 phr of a coupling agent comprising an organosilane compound, and 0.5 phr to 15 phr of an alkoxysilane, thereby forming an initial mixture; and mixing the initial mixture at a temperature of 100 °C to 170 °C, thereby forming a nonproductive mixture; and wherein the productive stage comprises combining together the nonproductive mixture with 0.5 phr to 15 phr of a reinforcing agent, wherein the reinforcing agent is a bismaleimide compound or a derivative thereof, and a curing agent, thereby forming an intermediate mixture; and mixing the intermediate mixture at a temperature of 70 °C to 120 °C, thereby forming a productive mixture.

Aspect 45. The method of aspect 44, wherein the nonproductive stage further comprises combining together at least one of a fatty acid, zinc oxide, a processing oil, or an antioxidant to form the initial mixture.

Aspect 46. The method of aspect 44 or aspect 45, wherein the productive stage further comprises combining together at least one of an accelerator or a retarder to form the intermediate mixture.

Now having described the aspects of the present invention, in general, the following Examples further describe the present invention. While aspects of the present invention are described in connection with the following examples and the corresponding text, there is no intent to limit aspects of the present invention to this description.

### E. Examples

The following examples are put forth so as to provide those of ordinary skill in the art with a complete invention and description of how the compounds, compositions, articles, devices and/or methods claimed herein are made and evaluated and are intended to be purely exemplary of the invention. Efforts have been made to ensure accuracy with respect to numbers (*e*.*g*., amounts, temperature, etc.), but some errors and deviations should be accounted for. Unless indicated otherwise, parts are parts by weight, temperature is in °C or is at ambient temperature, and pressure is at or near atmospheric.

### 1. Evaluation of Rubber Compositions

Two rubber compositions comprising a styrene butadiene rubber and natural rubber-based matrix are provided in Table 1. Notable differences between the compositions include the type of silica used (pretreated vs non-pretreated), the presence or absence of an alkoxy silane, and the type of reinforcing agent used.

As seen in Table 2, compared to the Control composition, the Experimental rubber composition has better uncured processability (measured as the uncured dynamic storage modulus G'); lower hysteresis (tangent delta); and improved tensile mechanical properties. Tires comprising the Experimental rubber compositions are likely to have better rolling resistance compared to tires comprising the Control composition, since low hysteresis contributes to an overall lower rolling resistance.

**Table 1**

| Rubber compositions with ingredient amounts given in phr | | | |
|---|---|---|---|
| Ingredient | Mixing Stage | Control | Experimental |
| Natural Rubber | NP1 | 65 | 65 |
| Styrene Butadiene Rubber | NP1 | 35 | 35 |
| Precipitated Silica | NP1 | -- | 35 |
| Pretreated Silica¹ | NP1 | 35 | -- |
| Coupling Agent² | NP1 | -- | 2.2 |
| Processing Oil | NP1 | 1.5 | 0.5 |
| Antioxidant³ | NP1 | -- | 1 |
| Hydrophobating Agent⁴ | NP1 | -- | 3.5 |
| Zinc Oxide | NP1 | -- | 4 |
| Fatty Acid⁵ | NP1 | -- | 3 |
| Phenolic Resins⁶ | NP2 | 0.5 | -- |
| Phenolic Resins⁷ | NP2 | 1.85 | -- |
| Antioxidant³ | NP2 | 1 | -- |
| Zinc Oxide | NP2 | 4 | -- |
| Fatty Acid⁵ | NP2 | 2.65 | -- |
| Coupling Agent⁸ | PR | 2 | -- |
| Coupling Agent² | PR | -- | 0.8 |
| Curing/Vulcanizing agent⁹ | PR | 3.21 | 0.8 |
| Crosslinking Agent¹⁰ | PR | 1.1 | -- |
| Reinforcing Agent¹¹ | PR | -- | 1.0 |
| Accelerator¹² | PR | -- | 1.5 |
| Accelerator¹³ | PR | 0.15 | 1.3 |
| Accelerator¹⁴ | PR | 1.33 | -- |
| Retarder¹⁵ | PR | 0.1 | 0.2 |
| Crosslinking Agent¹⁶ | PR | -- | 2.2 |
| **Total Parts** | | **154.39** | **157** |

| | | | |
|---|---|---|---|
| ¹ AGILON^{®} silica from the Pittsburgh Plate Glass Company ² a bifunctional organo-silane, including bis [3-(triethoxysilyl)propyl] disulfide ³ hydroquinoline compound ⁴ n-octyltriethoxysilane ⁵ stearic acid ⁶ unreactive phenol formaldehyde resin ⁷ reactive phenol formaldehyde resin ⁸ mixture of high abrasion furnace carbon black and a bifunctional organo-silane, including bis [3-(triethoxysily)propyl] tetrasulfide ⁹ insoluble sulfur ¹⁰ 72.5% hexamethoxymethylmelamine on a silica carrier ¹¹ N,N'-(m-phenylene)bismaleimide ¹² sulfenamide compound ¹³ guanidine compound ¹⁴ second sulfenamide compound ¹⁵ phthalimide compound ¹⁶ sulfur | | | |

**Table 2**

| Rheological Properties | | |
|---|---|---|
| Property | Control | Experimental |
| Rubber Process Analyzer 505 Properties | | |
| Uncured Dynamic Storage Modulus G'¹ | 0.189 | 0.122 |
| Tangent Delta at 10% strain² | 0.029 | 0.026 |

| Zwick Rebound Test Properties³ | | |
|---|---|---|
| Rebound (%) | 82.39 | 82.91 |

| Tensile Mechanical Properties⁴ | | |
|---|---|---|
| Tensile Strength | 12.98 | 14.19 |
| Elongation at Break (%) | 356 | 435 |
| Energy to Break | 5.89 | 7.11 |

| Hot U-Adhesion | | |
|---|---|---|
| Maximum Force (N)⁵ | 140 | 157 |
| Maximum Force (N)⁶ | 137 | 153 |

| Global Strebler Adhesion⁷ | | |
|---|---|---|
| Steady State Average Load (N) | 18.27 | 26.78 |
| Strebler (N/mm) | 3.88 | 5.27 |
| Average Force @ Average Value (N) | 21.08 | 29.12 |

| Global Fabric Strebler Adhesion⁸ | | |
|---|---|---|
| Steady State Average Load (N) | 7.38 | 17.25 |
| Strebler (N/mm) | 1.54 | 3.69 |
| Average Force @ Average Value (N) | 15.13 | 21.33 |

| | | |
|---|---|---|
| ¹ measured at a 15% strain amplitude, temperature of 100 °C, and frequency of 0.83 Hz ² measured at a 10% strain amplitude, temperature of 100 °C, and frequency of 1 Hz ³ measured at a temperature of 100 °C in accordance with ASTM D7121 ⁴ measured in accordance with ASTM D412 ⁵ adhesion to polyester ⁶ adhesion to nylon ⁷ adhesion to self at 100 °C 8 adhesion to nylon at 100 °C | | |

Properties of a rubber composition can be determined before, during, or after cure using a rubber process analyzer. Experimental rubber composition has a reduced uncured dynamic storage modulus G' (about 35% lower) compared to the Control rubber composition (Table 2), indicating that the Experimental composition has a lower viscosity and thus better processability. For properties of a cured rubber composition provided in Table 2 (tan d), the rubber composition was cured in a testing cavity at a temperature of 191 °C at 3.5% strain amplitude at 1.7 Hz for 4.88 minutes prior to obtaining the values.

Tangent delta (tan δ) is the ratio of the dynamic loss modulus (G") to the dynamic storage modulus (G"/G') of the cured rubber composition. A higher tan δ indicates more energy loss per stiffness of a compound. Tan δ provides a means of measuring hysteresis, or the amount of energy lost per cycle during deformation of an elastomer. Since hysteresis accounts for the majority of rolling resistance, an elastomer or composition with a lower tan delta can indicate a lower rolling resistance for a tire comprising said elastomer or composition. The Experimental rubber composition exhibits a lower tan δ (about 10% lower) compared to the Control composition.

The Zwick Rebound test can be used to determine the resilience of rubber, within a range of impact strain and strain rate, by means of the impacting and measuring apparatus conforming to the requirements described in the test method according to ASTM D7121. The test is conducted at a sample temperature of 100 °C. Resilience is recorded as pendulum rebound height after the pendulum hits a rubber sample. The higher the rebound value, the less energy is loss due to the pendulum's impact on the rubber sample. At 100 °C, higher rebound can be associated with a lower tire rolling resistance. The Control and Experimental rubber compositions were cured at 170 °C for 10 minutes prior to testing. The Experimental rubber composition exhibits a similar rebound value to the Control composition.

A cured/vulcanized rubber composition's tensile mechanical properties such as tensile stress, modulus at various strains, and elongation at break, can be measured using the ASTM D412 test procedure. Briefly, a Die C dumbbell shaped rubber sample of known dimensions is placed in an extensometer and then clamped in grips of a force displacement machine. The rubber sample is pulled at a set rate of 500 mm/min until it breaks. The Control and Experimental rubber compositions were cured at 170 °C for 10 minutes prior to testing. The Experimental rubber composition exhibits higher tensile strength (about 9% higher), greater elongation at break (about 22% longer), and higher energy to break (about 21% higher) compared to the Control composition.

The hot U-adhesion test provides a method of evaluating the relative adhesion of various types of dipped cord to rubber. Dipped cord samples are embedded in a 6.35 mm (1/4 inch) strip of rubber using a special mold and inserts. The inserts are held in a heater block and cords pulled from the rubber using a pulley type holder. The maximum force required to pull each cord from the rubber is recorded. The higher force to pull out the cord, the better rubber-cord adhesion. Prior to testing, the Control and Experimental rubber compositions were cured at 170 °C for 23 minutes. For the hot U-adhesion tests reported herein, a preheat time of 3 minutes and a pulling speed of 305 cm/min was used. The Experimental composition exhibits a higher adhesion to both polyester (about 12% higher) and nylon (about 11% higher) compared to the Control composition.

The Strebler adhesion test measures the interfacial adhesion of cured rubber compounds. The interfacial adhesion is measured by pulling a sample in a T-peel manner using a force displacement machine. A defined area, or window, created by a mask between the surfaces of the sample is subjected to the test. Samples may consist of two layers of the same compound, or two different compounds adhered together (Global Strebler), to determine the adhesion between rubbers. Variations in surface treatment can also be used (such as fabric, Global Fabric Strebler) to determine the adhesion between rubber and fabric. The higher the force to peel off, the higher adhesion. Prior to testing, the Control and Experimental rubber compositions were cured at 170 °C for 11 minutes or 23 minutes for measuring Strebler adhesion and fabric Strebler adhesion, respectively. For the tests reported herein, a pulling speed of 500 mm/min was used along with a curing pressure of 100 psi. The Experimental

rubber composition exhibits a higher adhesion to both itself (about 38% higher for average force @ average value) and nylon (about 41% higher for average force @ average value) compared to the Control composition.

## Claims

1. A composition comprising:
at least one elastomer;
10 phr to 150 phr of a silica selected from a conventional silica and a pretreated silica;
0.5 phr to 15 phr of a reinforcing agent, wherein the reinforcing agent is a bismaleimide compound or a derivative thereof; and
0.5 phr to 25 phr of a coupling agent, wherein the coupling agent comprises an organosilane compound or a derivative thereof.

2. The composition of claim 1, wherein, when the silica is a conventional silica, the composition further comprises from 0.5 phr to 15 phr of an alkoxysilane or derivative thereof, the alkoxysilane preferably being a C1-C5 alkoxysilane, a C1-C5 dialkoxysilane, a C1-C5 trialkoxysilane, or a combination thereof, or wherein the alkoxysilane or derivative thereof is preferably selected from the group consisting of a C1-C18 alkyl trimethoxysilane, a C1-C18 alkyl triethoxysilane, and a combination thereof.

3. The composition of claim 1 or 2, wherein the reinforcing agent has a formula represented by the following structure: 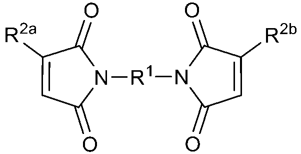 wherein R¹ is an alkyl group, an alkenyl group, an alkynyl group, a cycloalkyl group, a cycloalkenyl group, a cycloalkynyl group, or an aromatic group, and wherein R^{2a} and R^{2b} are individually selected from a hydrogen and an alkyl group.

4. The composition of claim 3, wherein R¹ is an aromatic group comprising no more than two aromatic rings.

5. The composition of at least one of the previous claims, wherein the reinforcing agent is selected from the group consisting of N,N'-ethylene-bismaleimide; N,N'-butylene-bismaleimide; N,N'-(m-phenylene)bismaleimide; N,N'-(p-phenylene)bismaleimide; N,N'-hexamethylene-bismaleimide; N,N'-4,4'-diphenylmethane-bismaleimide; N,N'-4,4'-diphenylether-bismaleimide; N,N'-4,4'-diphenylsulfone-bismaleimide; N,N'-4,4'-dicyclohexylethane-bismaleimide; N,N'-xylylene-bismaleimide; N,N'-diphenylcyclohexane-bismaleimide; N,N'-(p-tolylene)bismaleimide; N,N'-(methylenedi-p-phenylene)bismaleimide; N,N'-(oxydi-p-phenylene)bismaleimide; α,α-bis-(4-phenylene)bismaleimide; N,N'-(m-xylylene)biscitraconimide; α,α-bis-(4-maleimidophenyl)metadiisopropylbenzene; and a combination thereof.

6. The composition of at least one of the previous claims, wherein (i) the organosilane compound comprises a bifunctional organosilane; and/or wherein (ii) the organosilane compound is selected from the group consisting of bis[3-(trialkoxysilyl)alkyl]sulfide, bis[3-(trialkoxysilyl)alkyl]disulfide, bis[3-(trialkoxysilyl)alkyl]tetrasulfide, a mercapto silane, a blocked \mercapto silane, a trialkoxymercaptoalkyl silane, a derivative thereof, and a combination thereof.

7. The composition of at least one of the previous claims, wherein the at least one elastomer comprises repeat units formed from residues of monomers selected from one or more of ethylene, propylene, isobutene, butadiene, isoprene, styrene, acrylonitrile, and a combination thereof.

8. The composition of at least one of the previous claims, wherein the at least one elastomer is or comprises isoprene-isobutylene-rubber, halogenated isoprene-isobutylene-rubber, ethylene-propylene-diene-terpolymer, styrene-butadiene rubber, acrylonitrile-butadiene rubber, acrylonitrile-butadiene-styrene copolymer, polybutadiene, natural rubber, cis polyisoprene, or a combination thereof.

9. The composition of at least one of the previous claims, wherein the composition comprises:
at least one an elastomer;
10 phr to 150 phr of a conventional silica;
0.5 phr to 15 phr of a bismaleimide compound;
0.5 phr to 25 phr of an organosilane compound; and
0.5 phr to 15 phr of an alkoxysilane.

10. A vulcanized rubber composition, comprising the composition of at least one of the previous claims that has been vulcanized.

11. The vulcanized rubber composition of claim 10, wherein the composition of claim 9 has been vulcanized, wherein this vulcanized rubber composition has a normalized hysteresis loss, expressed as tan d, that is at least 10% smaller than the normalized hysteresis loss of an equivalent composition that comprises a pretreated silica in place of both the conventional silica and the alkoxysilane, and wherein tan d is measured at a strain amplitude of 10%, a temperature of 100 °C, and a frequency of 1 Hz.

12. An article comprising the vulcanized rubber composition of claim 11.

13. The article of claim 12, wherein the article is a tire or a component of a tire.

14. A method for mixing rubber, the method comprising a nonproductive stage and a productive stage, wherein the nonproductive stage comprises:
combining together at least one elastomer, 10 phr to 150 phr of a conventional silica, 0.5 phr to 25 phr of a coupling agent comprising an organosilane compound, and 0.5 phr to 15 phr of an alkoxysilane, thereby forming an initial mixture; and
mixing the initial mixture at a temperature of 100 °C to 170 °C, thereby forming a nonproductive mixture; and
wherein the productive stage comprises:
combining together the nonproductive mixture with 0.5 phr to 15 phr of a reinforcing agent, wherein the reinforcing agent is a bismaleimide compound or a derivative thereof, and a curing agent, thereby forming an intermediate mixture; and
mixing the intermediate mixture at a temperature of 70 °C to 120 °C, thereby forming a productive mixture.

15. The method of claim 14, wherein the nonproductive stage further comprises combining together at least one of a fatty acid, zinc oxide, a processing oil, or an antioxidant to form the initial mixture; and/or wherein the productive stage further comprises combining together at least one of an accelerator or a retarder to form the intermediate mixture.
